(19) Europäisches Patentamt
European Patent Office
Office européen des brevets

(11) EP 4 507 053 A1

(12) # EUROPEAN PATENT APPLICATION
published in accordance with Art. 153(4) EPC

(43) Date of publication:
**12.02.2025 Bulletin 2025/07**

(21) Application number: **22935909.6**

(22) Date of filing: **22.11.2022**

(51) International Patent Classification (IPC):
***H01M 10/0567*** *(2010.01)* ***H01M 4/525*** *(2010.01)*
***H01M 10/052*** *(2010.01)*

(52) Cooperative Patent Classification (CPC):
**H01M 4/525; H01M 10/052; H01M 10/0567;**
Y02E 60/10

(86) International application number:
**PCT/KR2022/018536**

(87) International publication number:
**WO 2023/191235 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.04.2022 KR 20220041191**

(71) Applicant: **SAMSUNG SDI CO., LTD.**
**Giheung-gu**
**Yongin-si, Gyeonggi-do**
**17084 (KR)**

(72) Inventors:
- **PARK, Hong Ryeol**
  **Yongin-Si Gyeonggi-do 17084 (KR)**
- **YANG, Ye Ji**
  **Yongin-Si Gyeonggi-do 17084 (KR)**
- **PARK, Sang Woo**
  **Yongin-Si Gyeonggi-do 17084 (KR)**
- **KIM, Sun Dae**
  **Yongin-Si Gyeonggi-do 17084 (KR)**
- **SHATUNOV, Pavel**
  **Yongin-Si Gyeonggi-do 17084 (KR)**
- **TSAY, Olga**
  **Yongin-Si Gyeonggi-do 17084 (KR)**
- **CHOI, Hyun Bong**
  **Yongin-Si Gyeonggi-do 17084 (KR)**
- **HWANG, Hyeon Ji**
  **Yongin-Si Gyeonggi-do 17084 (KR)**
- **KIM, Da Hyun**
  **Yongin-Si Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

(54) **ELECTROLYTE FOR LITHIUM SECONDARY BATTERY AND LITHIUM SECONDARY BATTERY COMPRISING SAME**

(57) Disclosed are an electrolyte for lithium secondary batteries and a lithium secondary battery including the same. The electrolyte for lithium secondary batteries includes: a lithium salt; a non-aqueous organic solvent; a compound represented by Formula 1 disclosed in the specification; and a compound represented by Formula 2 disclosed in the specification.

EP 4 507 053 A1

FIG. 1

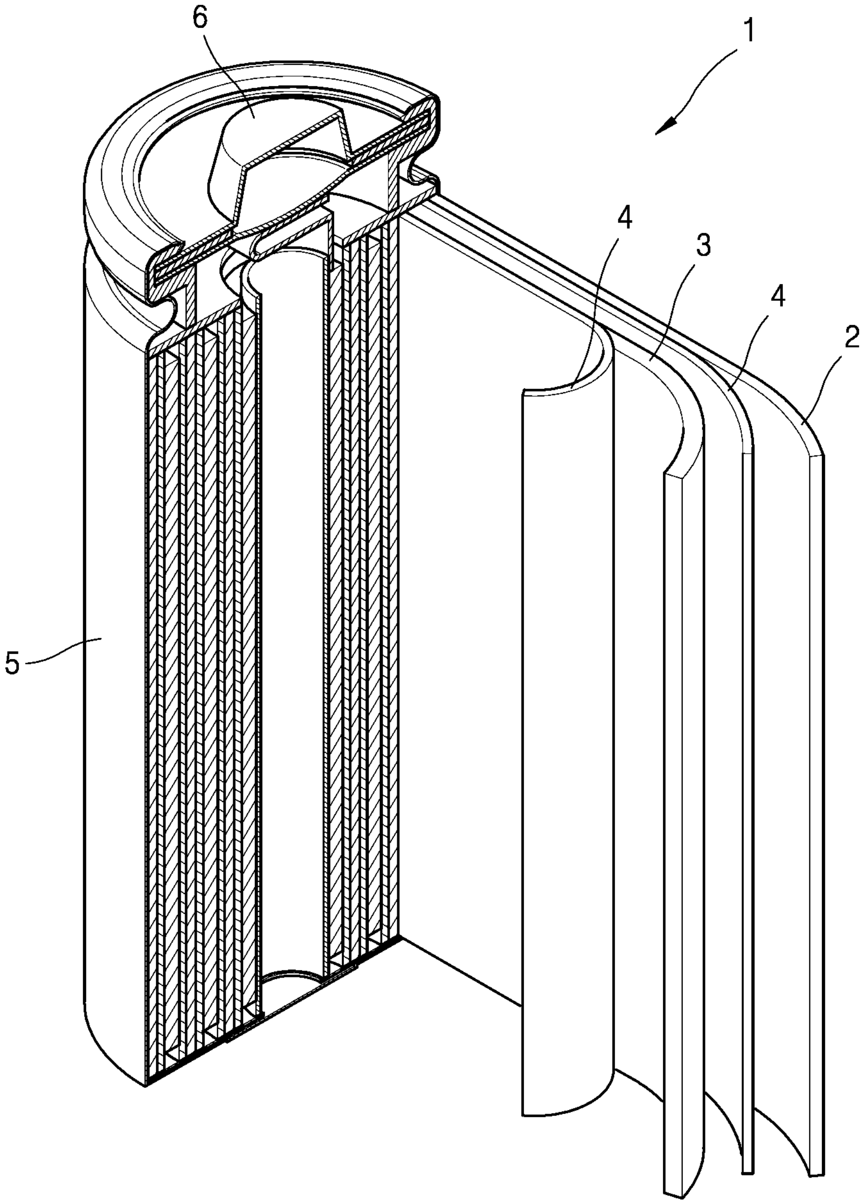

## Description

### Technical Field

One or more embodiments relate to an electrolyte for lithium secondary batteries, and a lithium secondary battery including the same.

### Background Art

Lithium secondary batteries have three times or more higher energy density per unit weight and are charged at higher speeds than conventional lead-acid batteries, nickel-cadmium batteries, nickel-hydrogen batteries, nickel-zinc batteries, and the like. An organic electrolyte is generally used in lithium secondary batteries. An organic electrolyte is prepared by dissolving a lithium salt in an organic solvent. Organic solvents are stable at high voltages and those having high ionic conductivity and permittivity and low viscosity are preferable. However, the use of an organic electrolyte including a lithium salt, as an electrolyte for lithium secondary batteries, may cause deterioration of lifespan characteristics, long-term durability, and high-temperature stability of lithium secondary batteries due to side reactions occurring between a negative/positive electrode and the electrolyte. Therefore, there is still a need for an electrolyte for lithium secondary batteries and a lithium secondary battery having improved lifespan characteristics at room temperature and storage properties at a high temperature (60 °C).

### Disclosure

### Technical problem

One or more embodiments include an electrolyte for lithium secondary batteries capable of improving battery performance.
One or more embodiments include a lithium secondary battery including the electrolyte.

### Technical Solution

According to one or more embodiments, an electrolyte for lithium secondary batteries includes:

a lithium salt;
a non-aqueous organic solvent;
a first compound represented by Formula 1 below; and
a second compound represented by Formula 2 below:

[Formula 1]

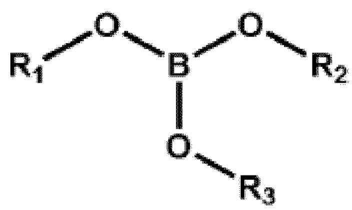

[Formula 2]

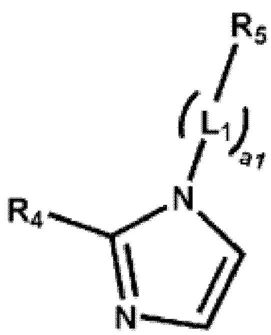

wherein
$R_1$, $R_2$, and $R_3$ are each independently a halogen atom, a substituted or unsubstituted C1-C30 alkyl group, a substituted or unsubstituted C3-C30 cycloalkyl group, a substituted or unsubstituted C3-C30 heterocycloalkyl group, a substituted or unsubstituted C5-C60 aryl group, or a substituted or unsubstituted C5-C60 heteroaryl group,
$R_4$ is hydrogen, a halogen atom, a cyano group, a substituted or unsubstituted C1-C30 alkyl group, a substituted or unsubstituted C3-C30 cycloalkyl group, a substituted or unsubstituted C3-C30 heterocycloalkyl group, a substituted or unsubstituted C5-C60 aryl group, or a substituted or unsubstituted C5-C60 heteroaryl group,

$L_1$ is a substituted or unsubstituted C1-C20 alkylene group,
a1 is an integer from 1 to 10, and
$R_5$ is a substituted or unsubstituted C1-C30 alkenyl group or a substituted or unsubstituted C1-C30 alkynyl group.

The $R_1$, $R_2$, and $R_3$ may be each independently a substituted or unsubstituted C1-C10 alkyl group, a substituted or unsubstituted C5-C20 aryl group, or a substituted or unsubstituted C5-C20 heteroaryl group.
The $R_4$ may be hydrogen or a substituted or unsubstituted C1-C10 alkyl group.
The $L_1$ may be a substituted or unsubstituted C1-C5 alkylene group, and
$R_5$ may be a substituted or unsubstituted C1-C10 alkenyl group or a substituted or unsubstituted C1-C10 alkynyl group.
The $R_1$, $R_2$, and $R_3$ may be each independently a substituted or unsubstituted C1-C10 alkyl group, a substituted or unsubstituted C5-C10 aryl group, or a substituted or unsubstituted C5-C10 heteroaryl group,

$R_4$ may be hydrogen or a substituted or unsubstituted C1-C5 alkyl group,
$L_1$ may be a substituted or unsubstituted C1-C3 alkylene group,
a1 may be an integer from 0 to 3, and
$R_5$ may be a substituted or unsubstituted C1-C5 alkenyl group or a substituted or unsubstituted C1-C5 alkynyl group.

The first compound may include at least one of Compound 1-A to Compound 1-D below, and the second compound may include at least one of Compound 2-E to Compound 2-H below:

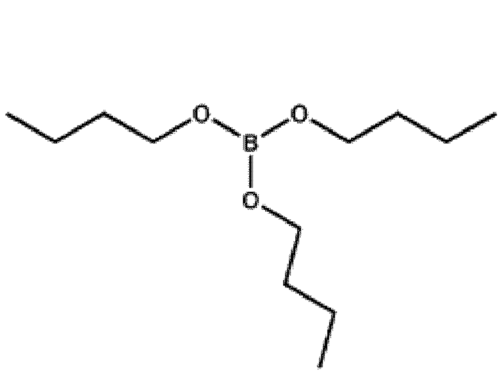

1-A

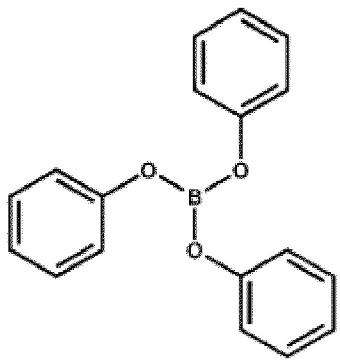

1-B

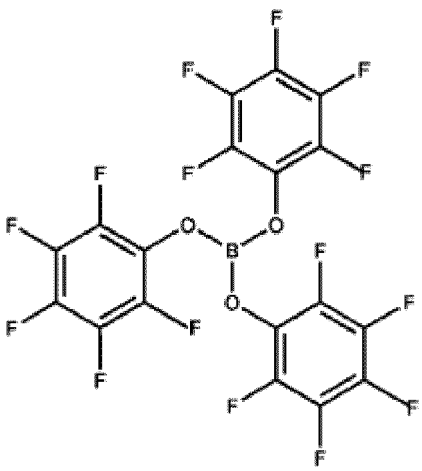

1-C

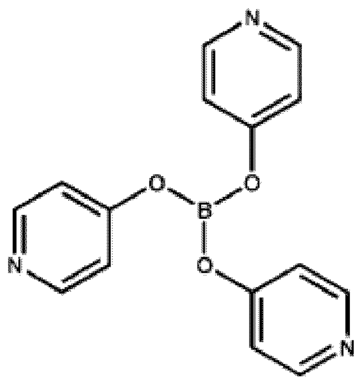

1-D

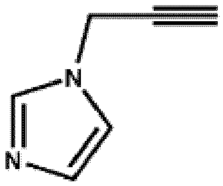
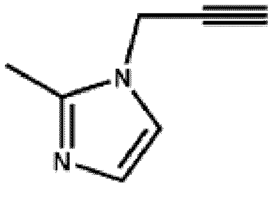
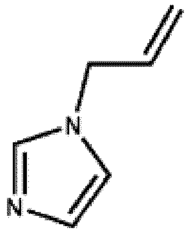
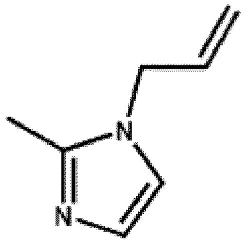

2-E 2-F 2-G 2-H

A content of the first compound may be 0.01 to 10 wt% based on the total weight of the electrolyte.

A content of the second compound may be 0.01 to 10 wt% based on the total weight of the electrolyte.

The lithium salt may include a lithium cation, and

an anion selected from $F^-$, $Cl^-$, Br, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N$-, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

The electrolyte may further include a third compound selected from vinylene carbonate, vinylethylene carbonate, and fluoroethylene carbonate.

According to one or more embodiments, a lithium secondary battery includes:

a positive electrode including a positive active material;
a negative electrode including a negative active material; and
the above-described electrolyte disposed between the positive electrode and the negative electrode.

The positive active material may include a compound represented by Formula 3 below:

[Formula 3] $Li_xNi_{1-y-z}Co_yM_zO_{2-a}X_a$

wherein

M may be Mn, Mg, Ca, Sr, Ba, Ti, Zr, Nb, Mo, W, Zn, Al, Si, Cr, Fe, V, a rare earth element, or any combination thereof,
X may be F, S, P, or any combination thereof,
$0.9 \le x \le 1.2$, $0 \le y \le 5$, $0 \le z \le 0.5$, $0 < 1-y-z \le 1$, and $0 \le a < 2$.
In Formula 3, $0.8 \le 1-y-z \le 1$.

Advantageous Effects

An electrolyte for lithium secondary batteries according to an embodiment includes: a lithium salt; a non-aqueous organic solvent; the above-described first compound represented by Formula 1; and the above-described second compound represented by Formula 2. Because not only elution of transition metal ions by an electrolytic solution may be inhibited at room temperature and a high temperature (60 °C), but also a solid electrolyte interface (SEI) on the surface of a negative electrode may be protected, a lithium secondary battery including the electrolyte may have excellent lifespan characteristics at room temperature and improved high-temperature storage properties due to a superior resistance-suppressing effect at a high temperature (60 °C).

Description of Drawings

FIG. 1 is a schematic diagram of a lithium secondary battery according to an embodiment.

Mode for Invention

Hereinafter, an electrolyte for lithium secondary batteries and a lithium secondary battery including the same will be described in detail with reference to embodiments of the present disclosure and the accompanying drawings. These embodiments are only provided by way of example to illustrate the present invention in more detail, and it will be apparent to those skilled in the art that the scope of the present invention is not limited by these embodiments.

Unless otherwise defined, all technical and scientific terms used herein have the same meaning as commonly

understood by one or ordinary skill in the art to which this application belongs. However, in the event of any conflict or inconsistency between terms used herein and terms of the cited references, the terms used in this specification take precedence over the terms of the cited references.

Although methods and materials similar or equivalent to those described in the specification may be used in embodiments or experiments of the present invention, appropriate methods and materials are described in the specification. An expression used in the singular encompasses the expression of the plural, unless it has a clearly different meaning in the context.

In the present specification, it is to be understood that the terms such as "including" or "having," etc., are intended to indicate the existence of the features, numbers, operations, elements, parts, components, or combinations thereof disclosed in the specification, and are not intended to preclude the possibility that one or more other features, numbers, operations, elements, parts, components, or combinations thereof may exist or may be added.

As used herein, the term "any combination thereof" refers to a mixture or combination with at least one of the listed elements.

As used herein, the term "and/or" includes any and all combinations of one or more of the associated listed items. The term "or" refers to "and/or" unless otherwise stated. Expressions such as "at least one of" or " one or more", when preceding a list of elements, modify the entire list of elements and do not modify the individual elements of the list.

In the drawings, thicknesses of various layers and regions may be enlarged or reduced for clarity. Throughout the specification, like reference numerals denote like elements. Throughout the specification, it will be understood that when one element such as layer, film, region, or plate, is referred to as being "on" another element, it may be directly on the other element, or intervening elements may also be present therebetween. Although the terms first, second, etc. may be used herein to describe various components, these components should not be limited by these terms. These terms are only used to distinguish one component from another.

The positive active material may include nickel and one or more other transition metals. A lithium secondary battery having high output and high capacity may be manufactured by using a lithium transition metal oxide, which includes nickel in an amount of, for example, 80 mol% or more, 85 mol% or more, 88 mol% or more, or 91 mol% or more based on a total number of moles of nickel and the transition metals, as a positive active material. However, because a lithium transition metal oxide with a high Ni content has a unstable surface structure, generation of gas caused by side reaction increases during a charging and discharging process of a battery, and elution of nickel and other transition metals increases. Therefore, a lithium secondary battery including a lithium transition metal oxide with a high Ni content as a positive active material may have deteriorated room-temperature lifespan characteristics and high-temperature lifespan characteristics and increased resistance at a high temperature, and thus there is a need to improve stability at a high temperature.

Based on these properties, the present inventors have suggested an electrolyte for lithium secondary batteries and a lithium secondary battery including the same as follows.

An electrolyte for lithium secondary batteries according to an embodiment includes: a lithium salt; a non-aqueous organic solvent; a first compound represented by Formula 1 below; and a second compound represented by Formula 2 below:

[Formula 1]

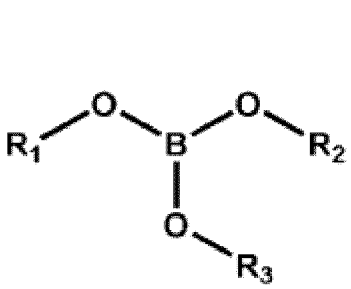

[Formula 2]

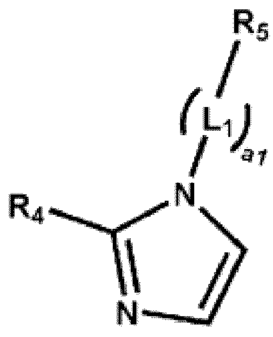

wherein

$R_1$, $R_2$, and $R_3$ are each independently a halogen atom, a substituted or unsubstituted C1-C30 alkyl group, a substituted or unsubstituted C3-C30 cycloalkyl group, a substituted or unsubstituted C3-C30 heterocycloalkyl group, a substituted or unsubstituted C5-C60 aryl group, or a substituted or unsubstituted C5-C60 heteroaryl group,

$R_4$ is hydrogen, a halogen atom, a cyano group, a substituted or unsubstituted C1-C30 alkyl group, a substituted or

unsubstituted C3-C30 cycloalkyl group, a substituted or unsubstituted C3-C30 heterocycloalkyl group, a substituted or unsubstituted C5-C60 aryl group, or a substituted or unsubstituted C5-C60 heteroaryl group,
$L_1$ is a substituted or unsubstituted C1-C20 alkylene group,
a1 is an integer from 1 to 10, and
$R_5$ is a substituted or unsubstituted C1-C30 alkenyl group or a substituted or unsubstituted C1-C30 alkynyl group.

For example, $R_1$, $R_2$, and $R_3$ may be each independently a substituted or unsubstituted C1-C10 alkyl group, a substituted or unsubstituted C5-C20 aryl group, or a substituted or unsubstituted C5-C20 heteroaryl group.
For example, $R_4$ may be hydrogen or a substituted or unsubstituted C1-C10 alkyl group.
For example, $L_1$ may be a substituted or unsubstituted C1-C5 alkylene group, and $R_5$ may be a substituted or unsubstituted C1-C10 alkenyl group or a substituted or unsubstituted C1-C10 alkynyl group.
For example, $R_1$, $R_2$, and $R_3$ may be each independently a substituted or unsubstituted C1-C10 alkyl group, a substituted or unsubstituted C5-C10 aryl group, or a substituted or unsubstituted C5-C10 heteroaryl group, $R_4$ may be hydrogen, or a substituted or unsubstituted C1-C5 alkyl group, $L_1$ may be a substituted or unsubstituted C1-C3 alkylene group, a1 may be an integer from 0 to 3, and $R_5$ may be a substituted or unsubstituted C1-C5 alkenyl group or a substituted or unsubstituted C1-C5 alkynyl group.
The electrolyte for lithium secondary batteries according to an embodiment includes a combination of the first compound represented by Formula 1 and the second compound represented by Formula 2. Because not only elution of transition metal ions such as Ni, Co, and Al by an electrolytic solution may be inhibited at room temperature and a high temperature (60 °C), but also a solid electrolyte interface (SEI) on the surface of a negative electrode may be protected, a lithium secondary battery including the electrolyte may have excellent lifespan characteristics at room temperature and improved high-temperature storage properties due to a superior resistance-suppressing effect at a high temperature (60 °C).
The reasons why performance of a lithium secondary battery is improved using the electrolyte including a combination of the first compound and the second compound will be described in more detail below. However, it is to be noted that the following descriptions are merely for illustrative purposes, and the scope of the present disclosure is not limited thereto.
$LiPF_6$ is generally used in an electrolyte as a lithium salt. However, thermal stability thereof is insufficient and $LiPF_6$ is easily hydrolyzed even by moisture. Accordingly, a $LiPF_6$-containing electrolyte becomes unstable when exposed to moisture and high temperature. Decomposition products of $LiPF_6$ are regarded as one of the main factors contributing to variations in the composition and stability of a negative electrode interface. Residual moisture and/or surface hydroxyl groups react with $PF_6$ anions in a solution to produce HF and release PFs. The released HF corrodes the positive electrode, and in some cases, a positive electrode resulting in gradual deterioration of electrochemical performance thereof.
In addition, in batteries including a lithium transition metal oxide with a high Ni content, oxidative decomposition of an electrolyte including $LiPF_6$ and a carbonate-based non-aqueous organic solvent rapidly occurs during a charge and discharge. Products of the oxidative decomposition continuously grow on the surface of a positive electrode to deteriorate lifespan characteristics and Coulombic Efficiency of the batteries. In addition, nickel and other transition metal ions eluted from the positive electrode migrate to the negative electrode to reduce formation of the solid electrolyte interface (SEI) film on the surface of the negative electrode, thereby generating additional lithium ions, deteriorating lifespan characteristics at room temperature and a high temperature, and increasing resistance at a high temperature.
In the case of using the first compound in the electrolyte, elution of nickel and other transition metals may be suppressed to about less than 1.7 % at a high temperature (60 °C) in comparison with electrolytes not including the first compound, even when a lithium transition metal oxide with a high Ni content, for example, a Ni content of 80 mol% or more, 85 mol% or more, 88 mol% or more, or 91 mol% or more, based on a total number of moles of the transition metals, as a positive active material. This is considered because the first compound promotes dissociation of lithium ions, improves solubility in the non-aqueous organic solvent, and improves surface properties of the positive active material.
Because the second compound having a higher reduction potential than the first compound participates in formation of the SEI film earlier than the first compound, excessive decomposition of the first compound may be inhibited and side reaction with the electrolyte may be suppressed, thereby forming a low-resistance SEI film and/or protective layer. As a result, during storage at a high temperature (60 °C), the second compound may inhibit high-temperature thermal decomposition of the lithium salt, thereby decreasing side reactions of the electrolyte. In addition, an imidazole substituent of the second compound contributes to stabilization of decomposition products of the lithium salt to inhibit further decomposition reaction, thereby improving high-temperature storage properties and room-temperature lifespan characteristics of batteries.
In the electrolyte for lithium secondary batteries according to an embodiment, the first compound may include at least one of Compound 1-A to Compound 1-D below and the second compound may include at least one of Compound 2-E to Compound 2-H below:

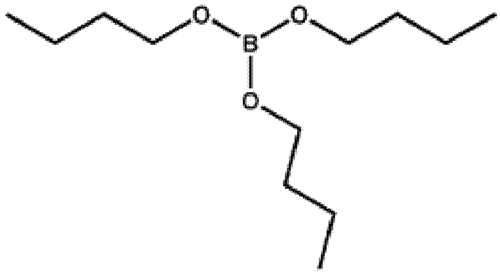

1-A

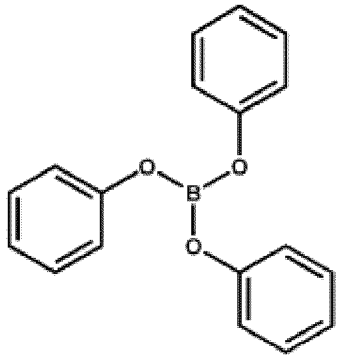

1-B

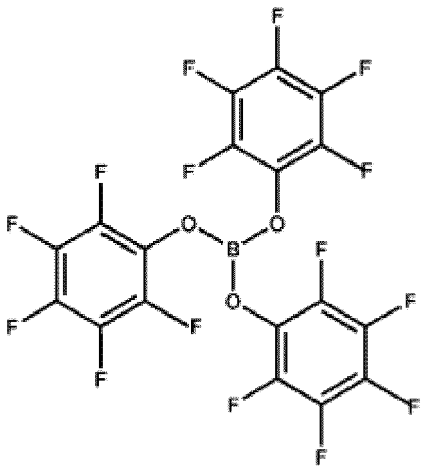

1-C

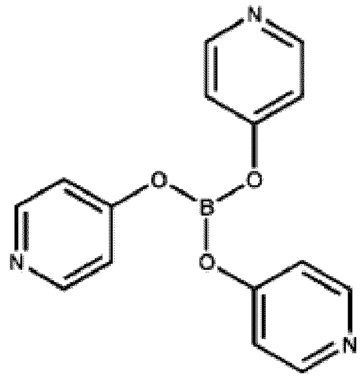

1-D

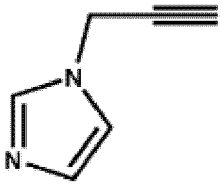

2-E

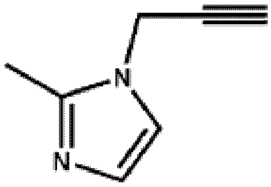

2-F

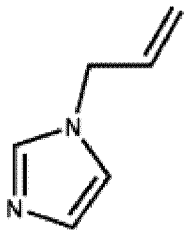

2-G

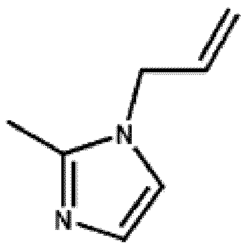

2-H

The content of the first compound may be 0.01 to 10 wt% based on the total weight of the electrolyte. For example, the content of the first compound may be 0.1 to 10 wt%, 0.1 to 8 wt%, 0.1 to 6 wt%, 0.1 to 5 wt%, 0.1 to 2.5 wt%, 0.1 to 2.0 wt%, or 0.5 to 1.5 wt% based on the total weight of the electrolyte.

The content of the second compound may be 0.01 to 10 wt% based on the total weight of the electrolyte. For example, the content of the second compound may be 0.1 to 10 wt%, 0.1 to 8 wt%, 0.1 to 6 wt%, 0.1 to 5 wt%, 0.1 to 2.5 wt%, 0.1 to 2.0 wt%, or 0.5 to 1.5 wt% based on the total weight of the electrolyte.

Within the ranges of the contents of the first compound and/or the second compound, not only elution of transition metal ions by an electrolytic solution may be inhibited at room temperature and a high temperature (60 °C), but also a solid electrolyte interface (SEI) film on the surface of a negative electrode may be protected, and thus a lithium secondary battery including the same may have excellent lifespan characteristics at room temperature and improved high-temperature storage properties due to a superior resistance-suppressing effect at a high temperature (60 °C).

The content of the first compound may be the same as or different from the content of the second compound. In the case where the content of the second compound is more than that of the first compound, variations in direct current resistance is further inhibited during storage at a high temperature, so that high-temperature storage properties may further be improved.

The lithium salt may include a lithium cation, and an anion selected from $F^-$, $Cl^-$, Br, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N$-, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$. In the electrolyte, the concentration of the lithium salt may be 0.01 to 2.0 M, but is not limited thereto, and an appropriate concentration may be used as needed. Within the concentration range, battery performance may further be improved.

The electrolyte may further include at least one third compound selected from vinylene carbonate, vinylethylene carbonate, and fluoroethylene carbonate. By adding the third compound to the electrolyte, the solid electrolyte interface (SEI) film may be formed more easily and decomposition reaction in the electrolyte may further be inhibited.

The content of the third compound may be 0.01 to 10 wt% based on the total weight of the electrolyte. For example, the content of the third compound may be 0.1 to 10 wt%, 0.1 to 8 wt%, 0.1 to 6 wt%, or 0.1 to 5 wt% based on the total weight of the electrolyte, but is not limited thereto, and the content may be optionally used in an appropriate amount within a range which does not adversely affect characteristics of batteries.

The non-aqueous organic solvent may be a carbonate-based solvent, an ester-based solvent, an ether-based solvent, a ketone-based solvent, an alcohol-based solvent, an aprotic solvent, or any combination thereof.

The non-aqueous organic solvent included in the electrolyte for lithium secondary batteries serves as a medium through which ions involved in electrochemical reaction of the battery may migrate and is not particularly limited as long as the non-aqueous organic solvent used in the present disclosure is commonly used in the art.

More particularly, as the carbonate-based solvent, dimethyl carbonate (DMC), diethyl carbonate (DEC), dipropyl carbonate (DPC), methyl propyl carbonate (MPC), ethyl propyl carbonate (EPC), methylethyl carbonate (MEC), ethylene carbonate (EC), propylene carbonate (PC), and butylene carbonate (BC) may be used, and as the ester-based solvent, methyl acetate, ethyl acetate, n-propyl acetate, dimethylacetate, methylpropionate, ethyl propionate, γ-butyrrolactone, decanolide, valerolactone, mevalonolactone, and caprolactone may be used. As the ether-based solvent, dibutyl ether, tetraglyme, diglyme, dimethoxyethane, 2-methyltetrahydrofuran, and tetrahydrofuran may be used, and as the ketone-based solvent, cyclohexanone may be used.

In addition, as the alcohol-based solvent, ethylalcohol and isopropylalcohol may be used, and as the aprotic solvent, nitriles such as R-CN (wherein R may be a linear, branched, or cyclic C2-C20 hydrocarbon group and may include a double-bond, an aromatic ring, or an ether group), amides such as dimethylformamide, dioxolanes such as 1,3-dioxolane and 1,4-dioxolane, and sulforane may be used.

The non-aqueous organic solvent may be used alone or in a combination of at least two thereof, and in the case of using a mixture of two or more solvents, a mixing ratio may be appropriately adjusted according to performance of the battery which may be obvious to those of ordinary skill in the art.

In addition, if a carbonate-based solvent is used, a mixture of cyclic carbonate and chain carbonate may be used. In this case, the cyclic carbonate may be mixed with the chain carbonate in a volume ratio of about 1:1 to about 1:9 to obtain excellent performance of the electrolyte.

The non-aqueous organic solvent of the present disclosure may further include an aromatic hydrocarbon-based organic solvent in addition to the carbonate-based solvent. In this regard, the carbonate-based solvent and the aromatic hydrocarbon-based organic solvent may be mixed in a volume ratio of 1:1 to 30:1. The aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or any combination thereof.

For example, the non-aqueous organic solvent may include at least one selected from ethylenecarbonate (EC), propylenecarbonate (PC), ethylmethylcarbonate (EMC), methylpropylcarbonate, ethylpropylcarbonate, dimethylcarbonate (DMC), diethylcarbonate (DEC), dipropylcarbonate, vinylethylene carbonate (VEC), butylenecarbonate, ethyl propionate (EP), propyl propionate (PP), ethyl butyrate, dimethylsulfoxide, dimethyl formamide, dimethylacetamide, γ-valerolactone, γ-butyro lactone, or tetrahydrofuran. However, the embodiment is not limited thereto, and any non-aqueous organic solvents available in the art may also be used.

The electrolyte may be in a liquid or gel state.

The lithium secondary battery according to another embodiment may include: a positive electrode including a positive active material; a negative electrode including a negative active material; and the above-described electrolyte disposed between the positive electrode and the negative electrode. The lithium secondary battery is not particularly limited in formation and may further include lithium-ion batteries, lithium-ion polymer batteries, lithium sulfur batteries, and the like.

Because the lithium secondary battery includes the above-described electrolyte, not only elution of transition metal ions by an electrolytic solution may be inhibited at room temperature and a high temperature (60 °C), but also a solid electrolyte interface (SEI) film on the surface of a negative electrode may be protected, and thus excellent lifespan characteristics at room temperature and improved high-temperature storage properties due to a superior resistance-suppressing effect at a high temperature (60 °C).

For example, the positive active material may be selected from the compounds represented by the following formulae. $Li_aA_{1-b}D'_bE_2$ (where $0.90 \leq a \leq 1.8$ and $0 \leq b \leq 0.5$); $Li_aG_{1-b}D'_bO_{2-c}E_c$ (where $0.90 \leq a \leq 1.8$, $0 \leq b \leq 0.5$, and $0 \leq c \leq 0.05$); $LiG_{2-b}D'_bO_{4-c}E_c$ (where $0 \leq b \leq 0.5$ and $0 \leq c \leq 0.05$); $Li_aNi_{1-b-c}Co_bD'_cE_a$ (where $0.90 \leq a \leq 1.8$, $0 \leq b \leq 0.5$, $0 \leq c \leq 0.05$, and $0 < a \leq 2$); $Li_aNi_{1-b-c}Co_bD'_cO_{2-a}J_a$ (where $0.90 \leq a \leq 1.8$, $0 \leq b \leq 0.5$, $0 \leq c \leq 0.05$, and $0 < a < 2$); $Li_aNi_{1-b-c}Co_bD'_cO_{2-a}J_2$ (where $0.90 \leq a \leq 1.8$, $0 \leq b \leq 0.5$, $0 \leq c \leq 0.05$, and $0 < a < 2$); $Li_aNi_{1-b-c}Mn_bD'_cE_a$ (where $0.90 \leq a \leq 1.8$, $0 \leq b \leq 0.5$, $0 \leq c \leq 0.05$, and $0 < a \leq 2$); $Li_aNi_{1-b-c}Mn_bD'_cO_{2-a}J_a$ (where $0.90 \leq a \leq 1.8$, $0 \leq b \leq 0.5$, $0 \leq c \leq 0.05$, and $0 < a < 2$); $Li_aNi_{1-b-c}Mn_bD'_cO_{2-a}J_2$ (where $0.90 \leq a \leq 1.8$, $0 \leq b \leq 0.5$, $0 \leq c \leq 0.05$, and $0 < a < 2$); $Li_aNi_bG_cL_dO_2$ (where $0.90 \leq a \leq 1.8$, $0 \leq b \leq 0.9$, $0 \leq c \leq 0.5$, and $0.001 \leq d \leq 0.2$); $Li_aNi_bG_cO_2$ (where $0.90 \leq a \leq 1.8$, $0 \leq b \leq 0.9$, and $0 \leq c \leq 0.5$); $Li_aNi_bCo_cMn_dL_cO_2$ (where $0.90 \leq a \leq 1.8$, $0 \leq b \leq 0.9$, $0 \leq c \leq 0.5$, $0 \leq d \leq 0.5$, and $0.001 \leq e \leq 0.2$); $Li_aNi_bCo_cMn_dO_2$ (where $0.90 \leq a \leq 1.8$, $0 \leq b \leq 0.9$, $0 \leq c \leq 0.5$, and $0 \leq d \leq 0.5$); $Li_aNiL_bO_2$ (where $0.90 \leq a \leq 1.8$ and $0.001 \leq b \leq 0.2$); $Li_aCoL_bO_2$ (where $0.90 \leq a \leq 1.8$ and $0.001 \leq b \leq 0.2$); $Li_aMnL_bO_2$ (where $0.90 \leq a \leq 1.8$ and $0.001 \leq b \leq 0.2$); $Li_aMn_2L_bO_4$ (where $0.90 \leq a \leq 1.8$ and $0.001 \leq b \leq 0.2$); $Li_aMn_2O_4$ (where $0.90 \leq a \leq 1.8$); $MO_2$; $MS_2$; $LiMS_2$; $V_2O_5$; $LiV_2O_5$; $LiQO_2$; $LiNiVO_4$; $Li_{(3-f)}T_2(PO_4)_3$ (where $0 \leq f \leq 2$); $Li_{(3-f)}Fe_2(PO_4)_3$ (where $0 \leq f \leq 2$); and $LiFePO_4$.

In the formulae, A is selected from the group consisting of Ni, Co, Mn, and any combination thereof, D' is selected from the group consisting of Al, Ni, Co, Mn, Cr, Fe, Mg, Sr, V, a rare earth element, and any combination thereof, E is selected from the group consisting of O, F, S, P, and any combination thereof, G is selected from the group consisting of Co, Mn, and any combination thereof, J is selected from the group consisting of F, S, P, and any combination thereof, L is a transition metal or a lanthanide element selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Ru, Os, Hs, Rh, Ir, Pd, Pt, Cu, Ag, Au, Zn, Cd, B, Al, Ga, In, Tl, Si, Ge, Sn, P, As, Sb, Bi, S, Se, Te, Po, Mn, La, Ce, and any combination thereof, M is selected from the group consisting of Ti, Mo, Mn, and any combination thereof, Q is selected from the group consisting of Cr, V, Fe, Sc, Ti, Y, and any combination thereof, and T is selected from the group consisting of V, Cr, Mn, Co, Ni, Cu, and any combination thereof.

Specifically, the positive active material may include a compound represented by Formula 3 below:

[Formula 3] $$Li_xNi_{1-y-z}Co_yM_zO_{2-a}X_a$$

wherein

M is Mn, Mg, Ca, Sr, Ba, Ti, Zr, Nb, Mo, W, Zn, Al, Si, Cr, Fe, V, a rare earth element, or any combination thereof,
X is F, S, P, or any combination thereof, and
$0.9 \leq x \leq 1.2$, $0 \leq y \leq 5$, $0 \leq z \leq 0.5$, $0 < 1-y-z \leq 1$, and $0 \leq a < 2$.

For example, in Formula 3, M may be Mn, Al, or any combination thereof.

For example, in Formula 3, $0.8 \leq 1-y-z \leq 1$.

The above-described compound having a coating layer on the surface thereof may also be used or a mixture of the above-described compound and a compound having a coating layer may also be used. The coating layer added to the surface of the compound may include, for example, a compound of a coating element such as an oxide, hydroxide, oxyhydroxide, oxycarbonate, or hydroxycarbonate of the coating element. The compound constituting the coating layer may be amorphous or crystalline. The coating element included in the coating layer may be Mg, Al, Co, K, Na, Ca, Si, Ti, V, Sn, Ge, Ga, B, As, Zr, or any mixture thereof. A method of forming the coating layer may be selected from those not adversely affecting physical properties of the positive active material. The coating methods may be, for example, spray coating and dip coating. These methods may be obvious to those of ordinary skill in the art, and thus detailed descriptions thereof will not be given.

The negative active material may include a carbonaceous material, a silicon-based material, or a silicon-carbonaceous material composite.

The carbonaceous material may be, for example, crystalline carbon, amorphous carbon, or any mixture thereof. The crystalline carbon may be, for example, graphite such as natural graphite or artificial graphite in amorphous, plate-like, flake, spherical or fibrous form, and the amorphous carbon may be, for example, soft carbon (carbon calcined at low temperature) or hard carbon, mesophase pitch, carbide, or calcined coke.

The silicon-based material may include silicon particles, silicon alloy particles, and/or silicon nanowires. For example, the silicon-based material may be silicon particles having an average particle diameter of 50 nm to 150 nm.

The silicon-carbonaceous material composite may be a composite having a structure in which silicon nanoparticles are disposed on a carbonaceous compound, a composite in which silicon particles are included on the surface of

and inside the carbonaceous compound, or a composite in which silicon particles are coated with a carbonaceous compound and contained inside the carbonaceous compound. In the silicon-carbonaceous material composite, the carbonaceous compound may be graphite, graphene, graphene oxide, or any combination thereof.

For example, the negative active material may be an active material prepared by dispersing silicon nanoparticles with an average particle diameter of about 200 nm or less on particles of a carbonaceous compound and conducting carbon coating, or an active material in which silicon (Si) particles are present on or inside graphite. The silicon nanoparticles may have an average particle diameter of 50 nm to 150 nm. The average particle diameter of the silicon-carbonaceous material composite may be, for example, from 1 $\mu$m to 20 $\mu$m. A lithium secondary battery including the negative active material may have improved initial efficiency, capacity, and lifespan characteristics.

The lithium secondary battery may be manufactured by the following method.

First, a positive electrode is prepared.

Although the positive electrode is prepared, for example, by the following exemplary method, the method is not limited thereto and may be adjusted according to required conditions.

First, the above-described positive active material, a conductive agent, a binder, and a solvent are mixed to prepare a positive active material composition. The prepared positive active material composition is directly applied onto an aluminum current collector and dried to prepare a positive electrode plate on which a positive active material layer is formed. In other embodiments, a positive electrode plate on which a positive active material layer is formed may be prepared by casting the positive active material composition on a separate support and laminating a film separated from the support on an aluminum current collector.

The conductive agent may be carbon black, graphite particulates, natural graphite, artificial graphite, acetylene black, Ketjen black, carbon fiber; carbon nanotubes; metal such as copper, nickel, aluminum, and silver each of which is used in powder, fiber, or tube form; or conductive polymers such as polyphenylene derivatives, but is not limited thereto and any material commonly used in the art as conductive agents may also be used.

The binder may be a vinylidene fluoride/hexafluoropropylene copolymer, polyvinylidene fluoride, polyacrylonitrile, polymethylmethacrylate, polytetrafluoroethylene (PTFE), a mixture thereof, or a styrene butadiene rubber polymer. The solvent may be N-methylpyrrolidone (NMP), acetone, and water, but is not limited thereto and any solvent commonly used in the art may also be used.

A plasticizer or a pore forming agent may further be added to the positive active material composition to form pores inside the electrode plate.

Amounts of the positive active material, the conductive agent, the binder, and the solvent may be the same levels as those commonly used in lithium secondary batteries. At least one of the conductive agent, the binder, and the solvent may be omitted in accordance with the use and the configuration of the lithium secondary battery.

Next, a negative electrode is prepared as follows. The negative electrode may be prepared in a substantially same manner as that of the positive electrode, except that, for example, the above-described negative active material is used instead of the positive active material. In addition, in a negative active material composition, a conductive agent, a binder, and a solvent substantially same as those of the positive electrode may be used.

For example, the negative active material, the conductive agent, the binder, and the solvent are mixed to prepare a negative active material composition, and the negative active material composition is directly coated on a copper current collector to prepare a negative electrode plate. Alternatively, the negative active material composition may be cast on a separate support and a film separated from the support may be laminated on the copper current collector to prepare a negative electrode plate.

As the negative active material, any materials used as negative active materials of lithium secondary batteries may also be used as well as the above-described negative active material. For example, the negative active material may include at least one selected from lithium metal, a metal alloyable with lithium, a transition metal oxide, a non-transition metal oxide, and a carbonaceous material.

The metal alloyable with lithium may be, for example, Si, Sn, Al, Ge, Pb, Bi, Sb an Si-Y' alloy (where Y' is an alkali metal, an alkali earth metal, a Group 13 element, a Group 14 element, a transition metal, a rare earth element, or any combination thereof (except for Si)), a Sn-Y' alloy (where Y' is an alkali metal, an alkali earth metal, a Group 13 element, a Group 14 element, a transition metal, a rare earth element, or any combination thereof (except for Sn)). The element Y' may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or any combination thereof.

The transition metal oxide is, for example, lithium titanium oxide, vanadium oxide, lithium vanadium oxide.

The non-transition metal oxide is, for example, $SnO_2$ and $SiO_x$ ($0<x<2$).

The carbonaceous material may be, for example, crystalline carbon, amorphous carbon, or any mixture thereof. The crystalline carbon may be, for example, graphite such as natural graphite or artificial graphite in amorphous, plate-like, flake, spherical or fibrous form. The amorphous carbon may be, for example, soft carbon (carbon calcined at low temperature) or hard carbon, mesophase pitch, carbide, or calcined coke.

Contents of the negative active material, the conductive agent, the binder, and the solvent may be the same levels

as those commonly used in lithium secondary batteries. At least one of the conductive agent, the binder, and the solvent may be omitted in accordance with the use and the configuration of the lithium secondary battery.

Subsequently, a separator to be inserted between the positive electrode and the negative electrode may be prepared.

Any separator commonly used in the art for lithium batteries may be used. For example, any separator having low resistance to ion migration of the electrolyte and excellent electrolyte-retaining ability may be used. For example, the separator may be selected from glass fiber, polyester, Teflon, polyethylene, polypropylene, polytetrafluoroethylene (PTFE), or any combination thereof, each of which is a non-woven or woven fabric. For example, a windable separator such as polyethylene or polypropylene may be used in lithium-ion batteries and a separator having excellent electrolyte-retaining ability may be used in lithium-ion polymer batteries. For example, the separator may be prepared according to the following exemplary method.

A polymer resin, a filler, and a solvent are mixed to prepare a separator composition. The separator composition may be directly coated on an electrode and dried to prepare a separator. Alternatively, the separator composition may be cast on a support and dried and then a separator film separated from the support may be laminated on an electrode to form a separator.

The polymer resin used to prepare the separator is not particularly limited and any polymer resin commonly used as a binder for electrode plates may also be used. For example, a vinylidene fluoride/hexafluoropropylene copolymer, polyvinylidenefluoride (PVDF), polyacrylonitrile, polymethylmethacrylate, or any mixture thereof may be used.

Subsequently, the above-described electrolyte is prepared.

The electrolyte may further include an organic solid electrolyte and/or an inorganic solid electrolyte in addition to the above-described electrolyte.

For example, as the organic solid electrolyte, a polyethylene derivative, a polyethylene oxide derivative, polypropylene oxide derivative, phosphoric acid ester polymer, polyester sulfide, polyvinyl alcohol, and polyvinylidene fluoride may be used.

For example, the inorganic solid electrolyte is boron oxide, lithium oxynitride, or the like. However, the solid electrolyte is not limited thereto and any known solid electrolyte may be used. The inorganic solid electrolyte may be formed on the negative electrode, for example, by sputtering, or the like or a separate solid electrolyte sheet may be laminated on the negative electrode.

As shown in FIG. 1, a lithium secondary battery 1 includes a positive electrode 3, a negative electrode 2, and a separator 4. The positive electrode 3, the negative electrode 2, and the separator 4 are wound or folded to be accommodated in a battery case 5. The electrolyte may be injected into the battery case 5 and the battery case 5 may be sealed with a cap assembly 6 to complete preparation of the lithium secondary battery 1. The battery case 5 may be a cylindrical type, but is not limited thereto, and may be, for example, a rectangular type, a thin film type, or a coin type.

For example, a pouch-type lithium secondary battery includes at least one battery assembly. The separator may be disposed between the positive electrode and the negative electrode to form a battery assembly. The battery assembly is stacked in a bi-cell structure, impregnated with an organic electrolyte, accommodated in a pouch, and sealed to complete the manufacture of the pouch-type lithium secondary battery. A plurality of battery assemblies may be stacked to form a battery pack and such battery packs may be used in any device that requires high capacity and high output. For example, battery packs may be used in laptop computers, smart phones, and electric vehicles.

Due to excellent lifespan characteristics and high rate properties, lithium secondary batteries may be used in, for example, electric vehicles EVs. For example, lithium batteries may be used in hybrid vehicles such as plug-in hybrid electric vehicles (PHEVs). In some embodiments, lithium batteries may be used in the fields requiring a large amount of power storage. For example, lithium batteries may be used in E-bikes and electric tools.

Throughout the specification, a and b of the term "Ca-Cb" refer to the numbers of carbon atoms of a particular functional group. That is, the functional group may include a to b carbon atoms. For example, "C1-C4 alkyl group" refers to an alkyl group having 1 to 4 carbon atoms, i.e., $CH_3$-, $CH_3CH_2$-, $CH_3CH_2CH_2$-, $(CH_3)_2CH$-, $CH_3CH_2CH_2CH_2$-, $CH_3CH_2CH(CH_3)$-, and $(CH_3)_3C$-.

A nomenclature for a particular functional group may include mono-radical or diradical depending on the context. For example, when a substituent requires two linkages to the rest of the molecule, the substituent should be understood as a diradical. For example, a substituent specified for an alkyl group requiring two linkages includes a diradical, such as-$CH_2$-, -$CH_2CH_2$-, -$CH_2CH(CH_3)CH_2$-, and the like. Another nomenclature for other radicals, such as "alkylene" clearly indicate that the radical is a diradical.

As used herein, the term "alkyl group" or "alkylene group" refers to a branched or unbranched aliphatic hydrocarbon group. In an embodiment, the alkyl group may be substituted or unsubstituted. Examples of the alkyl group are a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, and the like, but are not limited thereto, and each of the substituents may be optionally substituted or unsubstituted. In an embodiment, the alkyl group may include 1 to 6 carbon atoms. Examples of the C1-C6 alkyl group include methyl, ethyl, propyl, isopropyl,

butyl, iso-butyl, sec-butyl, pentyl, 3-pentyl, hexyl, and the like, but are not limited thereto.

As used herein, the term "cycloalkyl group" refers to a carbocyclic ring or ring system completely saturated. For example, cycloalkyl refers to cyclopropyl, cyclobutyl, cyclopentyl, and cyclohexyl. The heterocycloalkyl group refers to a cycloalkyl group including at least one hetero atom selected from N, O, P, or S. In this regard, the cycloalkyl group is as described above.

As used herein, the term "alkenyl group", as a hydrocarbon group including 2 to 20 carbon atoms with at least one carbon-carbon double bond, may include an ethenyl group, a 1-propenyl group, a 2-propenyl group, a 2-methyl-1-propenyl group, a 1-butenyl group, a 2-butenyl group, a cyclopropenyl group, a cyclopentenyl group, a cyclohexenyl group, a cycloheptenyl group, and the like, but is not limited thereto. In an embodiment, the alkenyl group may be substituted or unsubstituted. In an embodiment, the alkenyl group may include 2 to 40 carbon atoms.

As used herein, the term "alkynyl group", as a hydrocarbon group including 2 to 20 carbon atoms with at least one carbon-carbon triple bond, may include en ethynyl group, a 1-propynyl group, a 1-butynyl group, a 2-butynyl group, and the like, but is not limited thereto. In an embodiment, the alkynyl group may be substituted or unsubstituted. In an embodiment, the alkynyl group may have 2 to 40 carbon atoms.

As used herein, the term "alkoxy group" refers to an alkyl group bound to oxygen, and examples of the alkoxy group may be a methoxy group, an ethoxy group, a propoxy group, and the like, and at least one hydrogen atom of the alkoxy group may be substituted or unsubstituted.

As used herein, the term "aromatic" refers to a ring or ring system having a conjugated pi electron system, and includes a carbocyclic aromatic groups (e.g., a phenyl group) and a heterocyclic aromatic group (e.g., pyridine). The term includes a monocyclic or fused polycyclic ring (i.e., a ring that shares adjacent pairs of atoms) as long as the entire ring system is aromatic.

As used herein, the term "aryl group" refers to an aromatic ring or a ring system (that is, a fused ring of at least two rings sharing two adjacent carbon atoms) in which the ring backbone includes only carbon. When the aryl group is a ring system, each ring in the system is aromatic. For example, the aryl group may include a phenyl group, a biphenyl group, a naphthyl group, a phenanthrenyl group, a naphthacenyl group, and the like, but is not limited thereto. The aryl group may be substituted or unsubstituted.

As used herein, the term "heteroaryl group" refers to an aromatic ring system including one ring or a plurality of fused rings, and at least one ring atom is not a carbon atom, but a hetero atom. In the fused ring system, one or more heteroatoms may be present in only one ring. For example, the heteroatom may include oxygen, sulfur, and nitrogen, but is not limited thereto. For example, the heteroaryl group may be a furanyl group, a thienyl group, an imidazolyl group, a quinazolinyl group, a quinolinyl group, an isoquinolinyl group, a quinoxalinyl group, a pyridinyl group, a pyrrolyl group, an oxazolyl group, an indolyl group, and the like, but is not limited thereto.

As used herein, the term "aralkyl group" or "alkylaryl group" refers to an aryl group linked as a substituent via an alkylene group such as a C7-C14 aralkyl group and may include a benzyl group, a 2-penylethyl group, a 3-penylpropyl group, and a naphthyl alkyl group, but is not limited thereto. In an embodiment, the alkylene group is a lower alkylene group (i.e., a C1-C4 alkylene group).

As used herein, the term "aryloxy group" refers to an aryl group bound to oxygen, and examples of the aryloxy group may be a phenoxy group, and at least one hydrogen atom of the aryl group may be substituted or unsubstituted.

As used herein, the term "cycloalkenyl group" refers to a carbocyclic ring or ring system with at least one double bond, i.e., a non-aromatic ring system. For example, the cycloalkenyl group may be a cyclohexenyl group.

As used herein, the term "heterocyclyl group" refers to a non-aromatic ring or ring system including at least one hetero atom in a cyclic backbone.

As used herein, the term "halogen" refers to a stable atom belonging to Group 17 of the periodic table of elements, for example, fluorine, chlorine, bromine, or iodine, particularly, fluorine and/or chlorine.

As used herein, the term "cyano group" refers to "-CN group".

As used herein, the substituent may be derived by substitution of at least one hydrogen atom in an unsubstituted mother group with another atom or a functional group. Unless stated otherwise, a "substituted" functional group refers to a functional group substituted with at least one substituent selected from a C1-C40 alkyl group, a C2-C40 alkenyl group, a C3-C40 cycloalkyl group, a C3-C40 cycloalkenyl group, a C1-C40 alkyl group, and a C7-C40 aryl group. When a functional group is "optionally" substituted, it means that the functional group may be substituted with such a substituent as listed above.

Hereinafter, one or more embodiments will be described in detail with reference to the following examples and comparative examples. However, these examples and comparative examples are not intended to limit the purpose and scope of the one or more embodiments.

Example s

(Preparation of Electrolyte)

**Example 1: Electrolyte**

1.5 M $LiPF_6$ was added to a mixed solvent of ethylene carbonate (EC), ethylmethyl carbonate (EMC), and dimethyl carbonate (DMC) mixed in a volume ratio of 20:10:70. As additives, Compound 1-B below (triphenylborate), Compound 2-E below (1-propargylimidazole), and fluoroethylene carbonate (FEC) were added to the mixed solvent at 1 wt%, 0.5 wt%, and 5 wt%, respectively, to prepare an electrolyte.

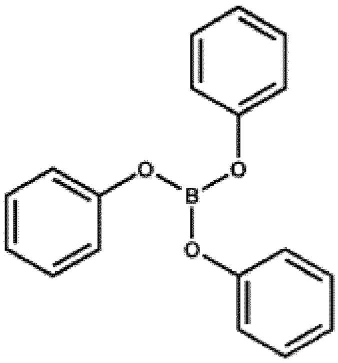

1-B

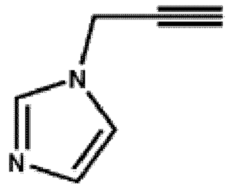

2-E

**Example 2: Electrolyte**

An electrolyte was prepared in the same manner as in Example 1, except that 1 wt%, instead of 0.5 wt%, of Compound 2-E (1-propargylimidazole) was added thereto.

**Example 3: Electrolyte**

An electrolyte was prepared in the same manner as in Example 1, except that 1.5 wt%, instead of 0.5 wt%, of Compound 2-E (1-propargylimidazole) was added thereto.

**Example 4: Electrolyte**

An electrolyte was prepared in the same manner as in Example 1, except that 0.5 wt% of Compound 2-F below (2-methyl-1-(propin-2-yl)-1H-imidazole) was added thereto instead of 0.5 wt% of Compound 2-E (1-propargylimidazole).

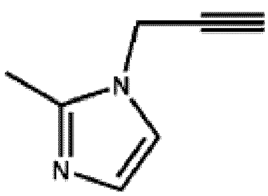

2-F

**Example 5: Electrolyte**

An electrolyte was prepared in the same manner as in Example 1, except that 1 wt% of Compound 2-F (2-methyl-1-(propin-2-yl)-1H-imidazole) was added thereto instead of 0.5 wt% of Compound 2-E (1-propargylimidazole).

**Example 6: Electrolyte**

An electrolyte was prepared in the same manner as in Example 1, except that 1.5 wt% of Compound 2-F below (2-methyl-1-(propin-2-yl)-1H-imidazole) was added thereto instead of 0.5 wt% of Compound 2-E (1-propargylimidazole).

**Example 7: Electrolyte**

An electrolyte was prepared in the same manner as in Example 1, except that 0.5 wt% of Compound 2-G below (1-allyl-1H-imidazole) was added thereto instead of 0.5 wt% of Compound 2-E (1-propargylimidazole).

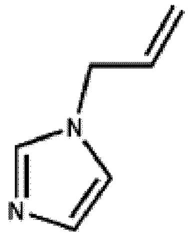

2-G

**Example 8: Electrolyte**

An electrolyte was prepared in the same manner as in Example 1, except that 1 wt% of Compound 2-G (1-allyl-1H-imidazole) was added thereto instead of 0.5 wt% of Compound 2-E (1-propargylimidazole).

**Example 9: Electrolyte**

An electrolyte was prepared in the same manner as in Example 1, except that 1.5 wt% of Compound 2-G (1-allyl-1H-imidazole) was added thereto instead of 0.5 wt% of Compound 2-E (1-propargylimidazole).

**Example 10: Electrolyte**

An electrolyte was prepared in the same manner as in Example 1, except that 0.5 wt% of Compound 2-H below (1-allyl-2-methyl-1H-imidazole) was added thereto instead of 0.5 wt% of Compound 2-E (1-propargylimidazole).

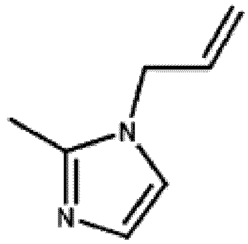

2-H

**Example 11: Electrolyte**

An electrolyte was prepared in the same manner as in Example 1, except that 1 wt% of Compound 2-H (1-allyl-2-methyl-1H-imidazole) was added thereto instead of 0.5 wt% of Compound 2-E (1-propargylimidazole).

**Example 12: Electrolyte**

An electrolyte was prepared in the same manner as in Example 1, except that 1.5 wt% of Compound 2-H (1-allyl-2-methyl-1H-imidazole) was added thereto instead of 0.5 wt% of Compound 2-E (1-propargylimidazole).

**Comparative Example 1: Electrolyte**

1.5 M $LiPF_6$ was added to a mixed solvent of ethylene carbonate (EC), ethylmethyl carbonate (EMC), and dimethyl carbonate (DMC) in a volume ratio of 20:10:70. As an additive, fluoroethylene carbonate (FEC) was added to the mixed solvent at 5 wt% to prepare an electrolyte.

Comparative Example 2: Electrolyte

An electrolyte was prepared in the same manner as in Example 1, except that Compound 1-A (tributyl borate) below and fluoroethylene carbonate (FEC) were added to the mixed solvent as additives at 0.5 wt% and 5 wt%, respectively.

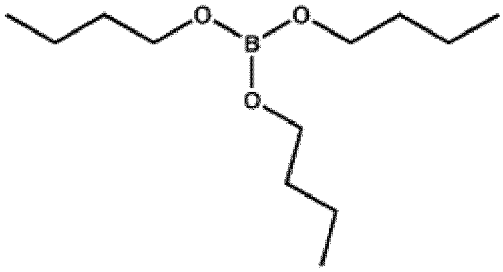

1-A

Comparative Example 3: Electrolyte

An electrolyte was prepared in the same manner as in Example 1, except that Compound 1-A (tributyl borate) and fluoroethylene carbonate (FEC) were added to the mixed solvent as additives at 1 wt% and 5 wt%, respectively.

Comparative Example 4: Electrolyte

An electrolyte was prepared in the same manner as in Example 1, except that Compound 1-A (tributyl borate) and fluoroethylene carbonate (FEC) were added to the mixed solvent as additives at 2 wt% and 5 wt%, respectively.

Comparative Example 5: Electrolyte

An electrolyte was prepared in the same manner as in Example 1, except that Compound 1-B (triphenylborate) and fluoroethylene carbonate (FEC) were added to the mixed solvent as additives at 0.5 wt% and 5 wt%, respectively.

Comparative Example 6: Electrolyte

An electrolyte was prepared in the same manner as in Example 1, except that Compound 1-B (triphenylborate) and fluoroethylene carbonate (FEC) were added to the mixed solvent as additives at 1 wt% and 5 wt%, respectively.

Comparative Example 7: Electrolyte

An electrolyte was prepared in the same manner as in Example 1, except that Compound 1-B (triphenylborate) and fluoroethylene carbonate (FEC) were added to the mixed solvent as additives at 2 wt% and 5 wt%, respectively.

Comparative Example 8: Electrolyte

An electrolyte was prepared in the same manner as in Example 1, except that Compound 1-C below (tris(pentafluoropenyl)borate) and fluoroethylene carbonate (FEC) were added to the mixed solvent as additives at 0.5 wt% and 5 wt%, respectively. The Compound 1-C (tris(pentafluoropenyl)borate) was synthesized according to the method disclosed in International Patent Application Publication No. 2014-1471612.

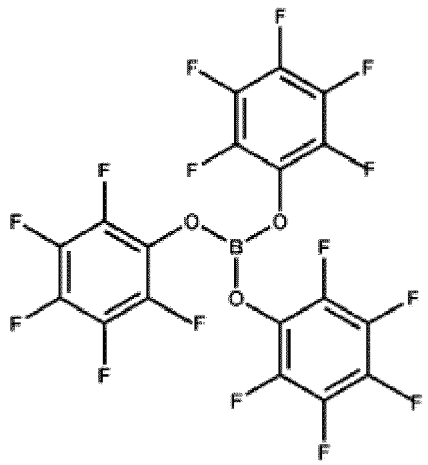

1-C

**Comparative Example 9: Electrolyte**

An electrolyte was prepared in the same manner as in Example 1, except that Compound 1-C (tris(pentafluoropenyl)borate) and fluoroethylene carbonate (FEC) were added to the mixed solvent as additives at 1 wt% and 5 wt%, respectively.

**Comparative Example 10: Electrolyte**

An electrolyte was prepared in the same manner as in Example 1, except that Compound 1-C (tris(pentafluoropenyl)borate) and fluoroethylene carbonate (FEC) were added to the mixed solvent as additives at 2 wt% and 5 wt%, respectively.

**Comparative Example 11: Electrolyte**

An electrolyte was prepared in the same manner as in Example 1, except that Compound 1-D below (tris(4-pyridyl)borate) and fluoroethylene carbonate (FEC) were added to the mixed solvent as additives at 0.5 wt% and 5 wt%, respectively.

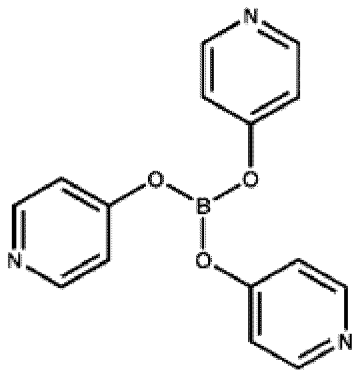

1-D

**Comparative Example 12: Electrolyte**

An electrolyte was prepared in the same manner as in Example 1, except that Compound 1-D below (tris(4-pyridyl)borate) and fluoroethylene carbonate (FEC) were added to the mixed solvent as additives at 1 wt% and 5 wt%, respectively.

## Comparative Example 13: Electrolyte

An electrolyte was prepared in the same manner as in Example 1, except that Compound 1-D below (tris(4-pyridyl)borate) and fluoroethylene carbonate (FEC) were added to the mixed solvent as additives at 2 wt% and 5 wt%, respectively.

The compositions of the compounds, as additives, included in the electrolytes prepared in Examples 1 to 12 and Comparative Examples 1 to 13, and contents thereof are listed in Table 1 below. The contents (wt%) of the compounds as additives are based on the total weights of the electrolytes.

Table 1

| | 1-A (wt%) | 1-B (wt%) | 1-C (wt%) | 1-D (wt%) | 2-E (wt%) | 2-F (wt%) | 2-G (wt%) | **2-H** (wt%) | FEC (wt%) |
|---|---|---|---|---|---|---|---|---|---|
| Example 1 | - | 1 | - | - | 0.5 | - | - | - | 5 |
| Example 2 | - | 1 | - | - | 1 | - | - | - | 5 |
| Example 3 | - | 1 | - | - | 1.5 | - | - | - | 5 |
| Example 4 | - | 1 | - | - | - | 0.5 | - | - | 5 |
| Example 5 | - | 1 | - | - | - | 1 | - | - | 5 |
| Example 6 | - | 1 | - | - | - | 1.5 | - | - | 5 |
| Example 7 | - | 1 | - | - | - | - | 0.5 | - | 5 |
| Example 8 | - | 1 | - | - | - | - | 1 | - | 5 |
| Example 9 | - | 1 | - | - | - | - | 1.5 | - | 5 |
| Example 10 | - | 1 | - | - | - | - | - | 0.5 | 5 |
| Example 11 | - | 1 | - | - | - | - | - | 1 | 5 |
| Example 12 | - | 1 | - | - | - | - | - | 1.5 | 5 |
| Comparative Example 1 | - | - | - | - | - | - | - | - | 5 |
| Comparative Example 2 | 0.5 | - | - | - | - | - | - | - | 5 |
| Comparative Example 3 | 1 | - | - | - | - | - | - | - | 5 |
| Comparative Example 4 | 2 | - | - | - | - | - | - | - | 5 |
| Comparative Example 5 | - | 0.5 | - | - | - | - | - | - | 5 |
| Comparative Example 6 | - | 1 | - | - | - | - | - | - | 5 |
| Comparative Example 7 | - | 2 | - | - | - | - | - | - | 5 |
| Comparative Example 8 | - | - | 0.5 | - | - | - | - | - | 5 |
| Comparative Example 9 | - | - | 1 | - | - | - | - | - | 5 |
| Comparative Example 10 | - | - | 2 | - | - | - | - | - | 5 |
| Comparative Example 11 | - | - | - | 0.5 | - | - | - | - | 5 |
| Comparative Example 12 | - | - | - | 1 | - | - | - | - | 5 |
| Comparative Example 13 | - | - | - | 2 | - | - | - | - | 5 |

(Manufacture of Lithium Secondary Battery (Coin Cell))

## Example 13

A positive active material slurry was prepared by adding a mixture of 97 wt% of $LiNi_{0.91}Co_{0.07}Al_{0.02}O_2$ as a positive active material, 0.5 wt% of artificial graphite powder as a conductive material, 0.8 wt% of carbon black, and 1.7 wt% of polyvinylidene fluoride (PVdF) to N-methyl-2-pyrrolidone, and stirring the mixture by using a mechanical stirrer for 30 minutes. The slurry was applied onto a 20 μm-thick aluminum current collector by using a doctor blade to a thickness of about 60 μm and dried in a hot-air dryer at 100 °C for 0.5 hours, and then further dried in a vacuum at 120 °C for 4 hours, and

the resultant was roll-pressed to prepare a positive electrode.

A negative active material slurry was prepared by adding a mixture of 87 wt% of artificial graphite as a negative active material, 10.5 wt% of a silicon-graphite composite, 1.5 wt% of styrene-butadiene rubber (SBR), and 1 wt% of carboxymethyl cellulose (CMC) to distilled water and stirring the mixture by using a mechanical stirrer for 60 minutes. The slurry was applied to a 10 μm-thick copper current collector by using a doctor blade to a thickness of about 60 μm and dried in a hot-air dryer at 100 °C for 0.5 hours, and then further dried in a vacuum at 120 °C for 4 hours, and the resultant was roll-pressed to prepare a negative electrode.

A lithium secondary battery (coin cell) was prepared by using a polyethylene separator with a thickness of 14 μm coated on the positive electrode as a separator and the electrolyte prepared in Example 1 as an electrolyte.

**Examples 14 to 24**

Lithium secondary batteries (coin cells) were prepared in the same manner as in Example 13, except that the electrolytes prepared in Examples 2 to 12 were used instead of the electrolyte prepared in Example 1.

**Comparative Examples 14 to 26**

Lithium secondary batteries were prepared in the same manner as in Example 13, except that the electrolytes prepared in Comparative Examples 1 to 13 were used instead of the electrolyte prepared in Example 1.

**Example 25**

A lithium secondary battery (coin cell) was prepared in the same manner as in Example 13, except that 97 wt% of $LiNi_{0.94}Co_{0.045}Al_{0.015}O_2$ was used as the positive active material instead of 97 wt% of $LiNi_{0.91}Co_{0.07}Al_{0.02}O_2$.

**Examples 26 to 36**

Lithium secondary batteries (coin cells) were prepared in the same manner as in Example 25, except that the electrolytes prepared in Examples 2 to 12 were used instead of the electrolyte prepared in Example 1.

**Comparative Examples 27 to 39**

Lithium secondary batteries (coin cells) were prepared in the same manner as in Example 25, except that the electrolytes prepared in Comparative Examples 1 to 13 were used instead of the electrolyte prepared in Example 1.

(Evaluation of Performance of Lithium Secondary Battery)

**Evaluation Example 1: Room-temperature Lifespan Characteristics**

The lithium secondary batteries prepared in Examples 13 to 36 and Comparative Examples 14 to 39 were charged at 25 °C at a constant current of 0.5 C rate until a voltage reached 4.2 V, and the charging process was cut-off at a rate of 0.2 C rate in a constant voltage mode while the voltage of 4.2 V was maintained. Subsequently, the lithium secondary batteries were discharged at a constant current of 0.5 C rate until the voltage reached 2.5 V. This cycle was repeated 300 times. All of the lithium batteries were rested for 10 minutes after every charging/discharging cycle. Capacity retention ratios at the 300$^{th}$ cycle at room temperature is defined by Equation 1 below. The results are shown in Table 2 (Examples 13 to 24 and Comparative Examples 14 to 26) and Table 3 (Examples 25 to 36 and Comparative Examples 27 to 39), respectively.

Capacity retention ratio (%) = [discharge capacity at 300$^{th}$ cycle/discharge capacity at 1$^{st}$ cycle]$\times$100 [Equation 1]

Table 2

| | Capacity retention ratio at room temperature (@300$^{th}$ cycle, %) |
|---|---|
| Example 13 | 86 |
| Example 14 | 87 |
| Example 15 | 87 |

(continued)

| | Capacity retention ratio at room temperature (@300$^{th}$ cycle, %) |
|---|---|
| Example 16 | 89 |
| Example 17 | 90 |
| Example 18 | 89 |
| Example 19 | 89 |
| Example 20 | 91 |
| Example 21 | 91 |
| Example 22 | 88 |
| Example 23 | 88 |
| Example 24 | 89 |
| Comparative Example 14 | 77 |
| Comparative Example 15 | 81 |
| Comparative Example 16 | 83 |
| Comparative Example 17 | 84 |
| Comparative Example 18 | 83 |
| Comparative Example 19 | 84 |
| Comparative Example 20 | 86 |
| Comparative Example 21 | 79 |
| Comparative Example 22 | 82 |
| Comparative Example 23 | 82 |
| Comparative Example 24 | 79 |
| Comparative Example 25 | 81 |
| Comparative Example 26 | 83 |

Table 3

| | Capacity retention ratio at room temperature (@300$^{th}$ cycle, %) |
|---|---|
| Example 25 | 88 |
| Example 26 | 90 |
| Example 27 | 90 |
| Example 28 | 90 |
| Example 29 | 92 |
| Example 30 | 91 |
| Example 31 | 91 |
| Example 32 | 93 |
| Example 33 | 91 |
| Example 34 | 89 |
| Example 35 | 90 |
| Example 36 | 90 |
| Comparative Example 27 | 71 |
| Comparative Example 28 | 73 |

(continued)

| | Capacity retention ratio at room temperature (@300th cycle, %) |
|---|---|
| Comparative Example 29 | 74 |
| Comparative Example 30 | 75 |
| Comparative Example 31 | 86 |
| Comparative Example 32 | 88 |
| Comparative Example 33 | 83 |
| Comparative Example 34 | 77 |
| Comparative Example 35 | 83 |
| Comparative Example 36 | 81 |
| Comparative Example 37 | 79 |
| Comparative Example 38 | 85 |
| Comparative Example 39 | 84 |

Referring to Table 2, the lithium secondary batteries prepared in Examples 13 to 24 had improved room-temperature lifespan characteristics compared to the lithium secondary batteries prepared in Comparative Examples 14 to 26. Referring to Table 3, the lithium secondary batteries prepared in Examples 25 to 36 had improved room-temperature lifespan characteristics compared to the lithium secondary batteries prepared in Comparative Examples 27 to 39. Based thereon, it may be confirmed that the lithium secondary batteries including an electrolyte including all of the fluoroethylene carbonate (FEC), the borate-based compound (Compound 1-B), and the imidazole-based compound (Compound 2-E, 2-F, 2-G, or 2-H) as additives had improved room-temperature lifespan characteristics compared to the lithium secondary batteries including fluoroethylene carbonate (FEC) alone or both fluoroethylene carbonate (FEC) and the borate-based compound (Compound 1-B). Therefore, it may be confirmed that the lithium secondary batteries including the positive active material with a Ni content of 91 mol% or more had excellent room-temperature lifespan characteristics in the case where the electrolyte includes all of fluoroethylene carbonate (FEC), the borate-based compound (Compound 1-B), and the imidazole-based compound (Compound 2-E, 2-F, 2-G, or 2-H).

<u>**Evaluation Example 2: Lifespan Characteristics After Storage at High Temperature**</u>

The lithium secondary batteries prepared in Examples 13 to 36 and Comparative Examples 14 to 39 were charged at 25 °C at a constant current of 0.5 C rate until a voltage reached 4.2 V and the charging process was cut-off at a rate of 0.2 C rate in a constant voltage mode while the voltage of 4.2 V was maintained, and then the lithium secondary batteries were stored in the cut-off state at 60 °C for 30 days. A capacity retention rate after storage at 60 °C for 30 days is defined by Equation 2 below. The results are shown in Table 4 (Examples 13 to 24 and Comparative Examples 14 to 26) and Table 5 (Examples 25 to 36 and Comparative Examples 27 to 39), respectively.

Capacity retention ratio (%) = [residual discharge capacity after 30 days of storage/initial discharge capacity]$\times$100 [Equation 2]

Table 4

| | Capacity retention ratio after storage at high temperature (60 °C) (@30th day, %) |
|---|---|
| Example 13 | 89 |
| Example 14 | 90 |
| Example 15 | 89 |
| Example 16 | 91 |
| Example 17 | 92 |
| Example 18 | 92 |
| Example 19 | 88 |

(continued)

| | Capacity retention ratio after storage at high temperature (60 °C) (@30th day, %) |
|---|---|
| Example 20 | 90 |
| Example 21 | 89 |
| Example 22 | 87 |
| Example 23 | 89 |
| Example 24 | 89 |
| Comparative Example 14 | 72 |
| Comparative Example 15 | 75 |
| Comparative Example 16 | 79 |
| Comparative Example 17 | 75 |
| Comparative Example 18 | 84 |
| Comparative Example 19 | 87 |
| Comparative Example 20 | 87 |
| Comparative Example 21 | 78 |
| Comparative Example 22 | 80 |
| Comparative Example 23 | 83 |
| Comparative Example 24 | 76 |
| Comparative Example 25 | 78 |
| Comparative Example 26 | 79 |

Table 5

| | Capacity retention ratio after storage at high temperature (60 °C) (@30th day, %) |
|---|---|
| Example 25 | 83 |
| Example 26 | 84 |
| Example 27 | 82 |
| Example 28 | 85 |
| Example 29 | 88 |
| Example 30 | 88 |
| Example 31 | 80 |
| Example 32 | 82 |
| Example 33 | 83 |
| Example 34 | 79 |
| Example 35 | 79 |
| Example 36 | 81 |
| Comparative Example 27 | 63 |
| Comparative Example 28 | 69 |
| Comparative Example 29 | 73 |
| Comparative Example 30 | 72 |
| Comparative Example 31 | 75 |
| Comparative Example 32 | 79 |

(continued)

| | Capacity retention ratio after storage at high temperature (60 °C) (@30th day, %) |
|---|---|
| Comparative Example 33 | 78 |
| Comparative Example 34 | 71 |
| Comparative Example 35 | 72 |
| Comparative Example 36 | 72 |
| Comparative Example 37 | 68 |
| Comparative Example 38 | 70 |
| Comparative Example 39 | 71 |

Referring to Table 4, the lithium secondary batteries prepared in Examples 13 to 24 had improved lifespan characteristics after storage at a high temperature compared to the lithium secondary batteries prepared in Comparative Examples 14 to 26. Referring to Table 5, the lithium secondary batteries prepared in Examples 25 to 36 had improved lifespan characteristics after storage at a high temperature compared to the lithium secondary batteries prepared in Comparative Examples 27 to 39. Based thereon, it may be confirmed that the lithium secondary batteries including an electrolyte including all of fluoroethylene carbonate (FEC), the borate-based compound (Compound 1-B), and the imidazole-based compound (Compound 2-E, 2-F, 2-G, or 2-H) as additives have improved lifespan characteristics after storage at a high temperature compared to the lithium secondary batteries including fluoroethylene carbonate (FEC) alone or both fluoroethylene carbonate (FEC) and the borate-based compound (Compound 1-B) as additives. Therefore, it may be confirmed that the lithium secondary batteries including the positive active material with a Ni content of 91 mol% or more had excellent lifespan characteristics after storage at a high temperature in the case where the electrolyte includes all of fluoroethylene carbonate (FEC), the borate-based compound (Compound 1-B), and the imidazole-based compound (Compound 2-E, 2-F, 2-G, or 2-H).

**Evaluation Example 3: Variation in Resistance After Storage at High Temperature**

The lithium secondary batteries prepared in Examples 13 to 36 and Comparative Examples 14 to 39 were left standing at 60 °C in a state of charge (SOC, 100 %) for 30 days to evaluate variations in direct current internal resistance after storage at a high temperature (60 °C). The results are shown in Table 6 (Examples 13 to 24 and Comparative Examples 14 to 26) and Table 7 (Examples 25 to 36 and Comparative Examples 27 to 39), respectively.

Direct current internal resistance (DC-IR) was measured as follows.

The lithium secondary batteries prepared in Examples 13 to 36 and Comparative Examples 14 to 39 were charged at 25 °C at a constant current of 0.5 C rate until a voltage reached 4.2 V, and the charging process was cut-off at a rate of 0.2 C rate in a constant voltage mode while the charging process was cut-off at a rate of 0.2 C rate in a constant voltage mode while the voltage of 4.2 V was maintained, followed by resting for 30 minutes. Subsequently, the lithium secondary batteries were discharged at 4 C rate for 10 seconds, at 1 C rate for 10 seconds, and at 4 C rate for 4 seconds, respectively, and then currents and voltages respectively measured at 15 seconds and 23 seconds were substituted into $\Delta R = \Delta V/\Delta I$ to calculate initial resistance (difference in resistance between resistance at the 15 seconds and the 23 seconds).

The lithium secondary batteries were charged under the above-mentioned full charge conditions and left standing at 60 °C for 30 days, and then DC-IR was measured and calculated according to Equation 3 below.

[Equation 3]

$$\text{Variation in Resistance} = [\text{DC-IR after storage for 30 days}/\text{Initial DC-IR}] \times 100$$

[Table 6]

| | Variation in resistance after storage at high temperature (60 °C) (@30th day, %) |
|---|---|
| Example 13 | 118 |
| Example 14 | 112 |

(continued)

| | Variation in resistance after storage at high temperature (60 °C) (@30$^{th}$ day, %) |
|---|---|
| Example 15 | 113 |
| Example 16 | 110 |
| Example 17 | 105 |
| Example 18 | 107 |
| Example 19 | 107 |
| Example 20 | 106 |
| Example 21 | 104 |
| Example 22 | 106 |
| Example 23 | 105 |
| Example 24 | 105 |
| Comparative Example 14 | 138 |
| Comparative Example 15 | 123 |
| Comparative Example 16 | 125 |
| Comparative Example 17 | 127 |
| Comparative Example 18 | 120 |
| Comparative Example 19 | 121 |
| Comparative Example 20 | 127 |
| Comparative Example 21 | 127 |
| Comparative Example 22 | 130 |
| Comparative Example 23 | 134 |
| Comparative Example 24 | 130 |
| Comparative Example 25 | 132 |
| Comparative Example 26 | 136 |

[Table 7]

| | Variation in resistance after storage at high temperature (60 °C) (@30$^{th}$ day, %) |
|---|---|
| Example 25 | 125 |
| Example 26 | 124 |
| Example 27 | 124 |
| Example 28 | 113 |
| Example 29 | 113 |
| Example 30 | 115 |
| Example 31 | 108 |
| Example 32 | 106 |
| Example 33 | 106 |
| Example 34 | 105 |
| Example 35 | 107 |
| Example 36 | 108 |
| Comparative Example 27 | 149 |

(continued)

| | Variation in resistance after storage at high temperature (60 °C) (@30$^{th}$ day, %) |
|---|---|
| Comparative Example 28 | 131 |
| Comparative Example 29 | 134 |
| Comparative Example 30 | 141 |
| Comparative Example 31 | 127 |
| Comparative Example 32 | 130 |
| Comparative Example 33 | 131 |
| Comparative Example 34 | 142 |
| Comparative Example 35 | 144 |
| Comparative Example 36 | 147 |
| Comparative Example 37 | 136 |
| Comparative Example 38 | 139 |
| Comparative Example 39 | 140 |

Referring to Table 6, the lithium secondary batteries prepared in Examples 13 to had decreased variations in resistance after storage at a high temperature compared to the lithium secondary batteries prepared in Comparative Examples 14 to 26. Referring to Table 7, the lithium secondary batteries prepared in Examples 25 to 36 had decreased variations in resistance after storage at a high temperature compared to the lithium secondary batteries prepared in Comparative Examples 27 to 39. Based thereon, it may be confirmed that the lithium secondary batteries including an electrolyte including all of the fluoroethylene carbonate (FEC), the borate-based compound (Compound 1-B), and the imidazole-based compound (Compound 2-E, 2-F, 2-G, or 2-H) as additives had decreased variations in resistance after storage at a high temperature compared to the lithium secondary batteries including fluoroethylene carbonate (FEC) alone, or both fluoroethylene carbonate (FEC) and the borate-based compound (Compound 1-B). Therefore, it may be confirmed that the lithium secondary batteries including the positive active material with a Ni content of 91 mol% or more had improved performance due to the decreased variations in resistance after storage at a high temperature in the case where the electrolyte includes all of fluoroethylene carbonate (FEC), the borate-based compound (Compound 1-B), and the imidazole-based compound (Compound 2-E, 2-F, 2-G, or 2-H).

## Claims

1. An electrolyte for lithium secondary batteries, comprising:

   a lithium salt;
   a non-aqueous organic solvent;
   a first compound represented by Formula 1 below; and
   a second compound represented by Formula 2 below:

[Formula 1]

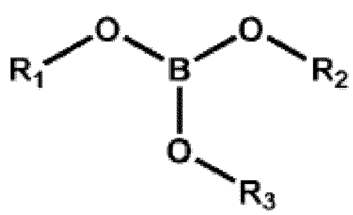

[Formula 2]

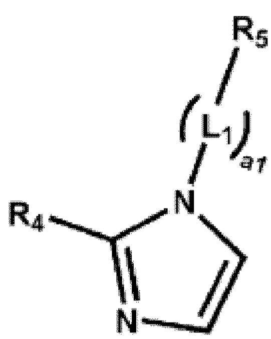

wherein
$R_1$, $R_2$, and $R_3$ are each independently a halogen atom, a substituted or unsubstituted C1-C30 alkyl group, a substituted or unsubstituted C3-C30 cycloalkyl group, a substituted or unsubstituted C3-C30 heterocycloalkyl group, a substituted or unsubstituted C5-C60 aryl group, or a substituted or unsubstituted C5-C60 heteroaryl group,
$R_4$ is hydrogen, a halogen atom, a cyano group, a substituted or unsubstituted C1-C30 alkyl group, a substituted or unsubstituted C3-C30 cycloalkyl group, a substituted or unsubstituted C3-C30 heterocycloalkyl group, a substituted or unsubstituted C5-C60 aryl group, or a substituted or unsubstituted C5-C60 heteroaryl group,
$L_1$ is a substituted or unsubstituted C1-C20 alkylene group, a1 is an integer from 0 to 10, and
$R_5$ is a substituted or unsubstituted C1-C30 alkenyl group or a substituted or unsubstituted C1-C30 alkynyl group.

**2.** The electrolyte of claim 1, wherein $R_1$, $R_2$, and $R_3$ are each independently a substituted or unsubstituted C1-C10 alkyl group, a substituted or unsubstituted C5-C20 aryl group, or a substituted or unsubstituted C5-C20 heteroaryl group.

**3.** The electrolyte of claim 1, wherein
$R_4$ is hydrogen or a substituted or unsubstituted C1-C10 alkyl group.

**4.** The electrolyte of claim 1, wherein

$L_1$ is a substituted or unsubstituted C1-C5 alkylene group, and
$R_5$ is a substituted or unsubstituted C1-C10 alkenyl group or a substituted or unsubstituted C1-C10 alkynyl group.

**5.** The electrolyte of claim 1, wherein

$R_1$, $R_2$, and $R_3$ are each independently a substituted or unsubstituted C1-C10 alkyl group, a substituted or unsubstituted C5-C10 aryl group, or a substituted or unsubstituted C5-C10 heteroaryl group,
$R_4$ is hydrogen or a substituted or unsubstituted C1-C5 alkyl group, $L_1$ is a substituted or unsubstituted C1-C3 alkylene group,
a1 is an integer from 0 to 3, and
$R_5$ is a substituted or unsubstituted C1-C5 alkenyl group or a substituted or unsubstituted C1-C5 alkynyl group.

**6.** The electrolyte of claim 1, wherein

the first compound comprises at least one of Compound 1-A to Compound 1-D below, and
the second compound comprises at least one of Compound 2-E to Compound 2-H below:

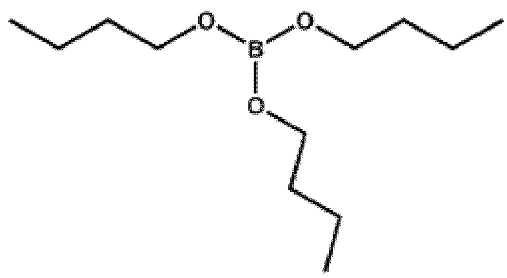

1-A

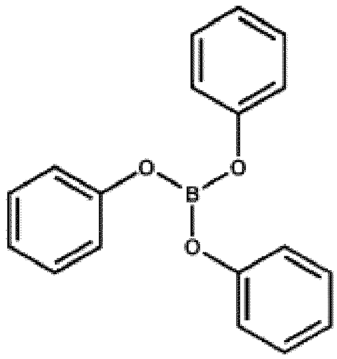

1-B

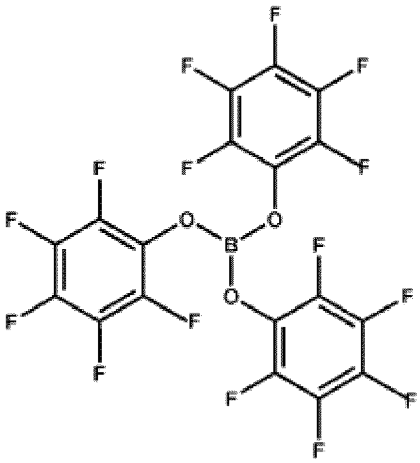

1-C

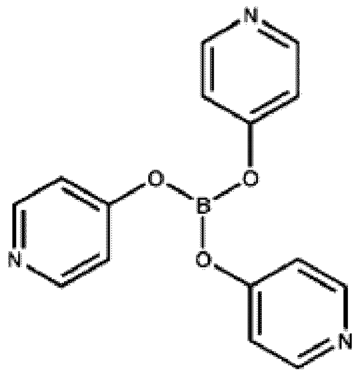

1-D

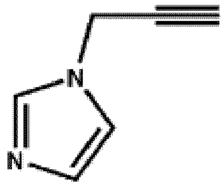

2-E

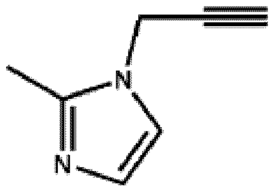

2-F

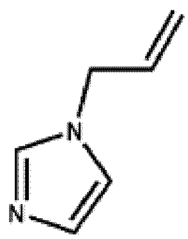

2-G

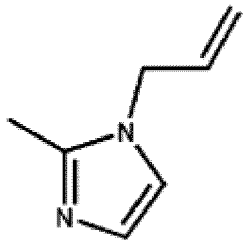

2-H

**7.** The conductive composition of claim 1, wherein a content of the first compound is 0.01 to 10 wt%, based on a total weight of the electrolyte.

**8.** The electrolyte of claim 1, wherein a content of the second compound is 0.01 to 10 wt%, based on a total weight of the electrolyte.

**9.** The electrolyte of claim 1, wherein

the lithium salt comprises a lithium cation, and
an anion selected from $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N$-, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

**10.** The electrolyte of claim 1, further comprising at least one third compound selected from vinylene carbonate, vinylethylene carbonate, and fluoroethylene carbonate.

**11.** A lithium secondary battery comprising:

a positive electrode including a positive active material;
a negative electrode including a negative active material; and
the electrolyte of any one of claims 1 to 10, disposed between the positive electrode and the negative electrode.

**12.** The lithium secondary battery of claim 11, wherein

the positive active material comprises a compound represented by Formula 3 below:

[Formula 3] $Li_xNi_{1-y-z}Co_yM_zO_{2-a}X_a$

wherein in the Formula,
M is Mn, Mg, Ca, Sr, Ba, Ti, Zr, Nb, Mo, W, Zn, Al, Si, Cr, Fe, V, a rare earth element, or any combination thereof,
X is F, S, P, or any combination thereof, and
$0.9 \leq x \leq 1.2$, $0 \leq y \leq 5$, $0 \leq z \leq 0.5$, $0 < 1-y-z \leq 1$, and $0 \leq a < 2$.

**13.** The lithium secondary battery of claim 12, wherein in Formula 3, $0.8 \leq 1-y-z \leq 1$.

FIG. 1

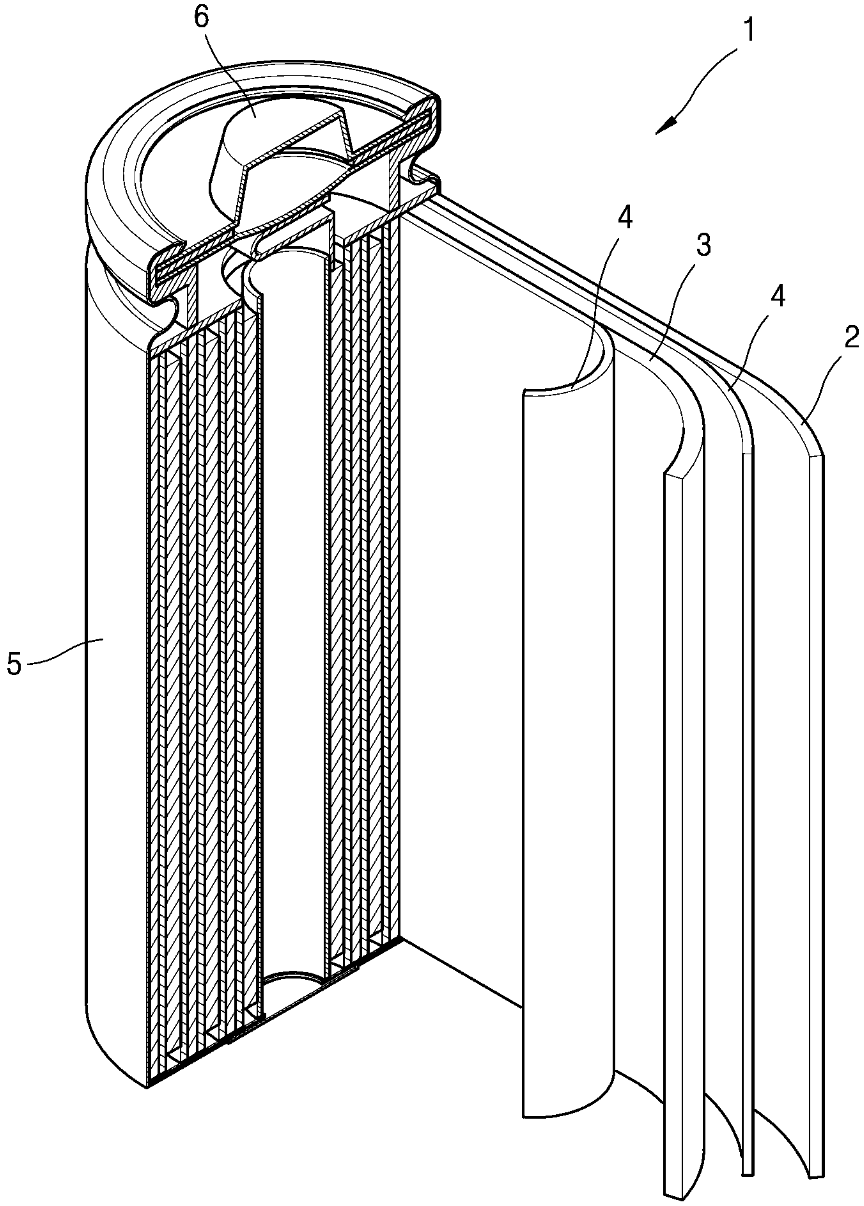

**INTERNATIONAL SEARCH REPORT**

International application No. **PCT/KR2022/018536**

**A. CLASSIFICATION OF SUBJECT MATTER**

**H01M 10/0567**(2010.01)i; **H01M 4/525**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/058(2010.01); H01M 10/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 전해질(electrolyte), 1-알릴이미다졸(1-allylimidazole), 트리페닐보레이트(triphenylborate), 첨가제(additive), 고온(high temperature)

**C. DOCUMENTS CONSIDERED TO BE RELEVANT**

| Category* | Citation of document, with indication, where appropriate, of the relevant passages | Relevant to claim No. |
|---|---|---|
| Y | CN 110707360 A (GUANGZHOU TINCI MATERIALS TECHNOLOGY CO., LTD.) 17 January 2020 (2020-01-17)<br>See claims 1-10; paragraphs [0020] and [0021]; and examples 1, 5 and 9. | 1-13 |
| Y | KR 10-2019-0060425 A (INCHEON NATIONAL UNIVERSITY RESEARCH & BUSINESS FOUNDATION) 03 June 2019 (2019-06-03)<br>See claims 5-15; and paragraphs [0007], [0050]-[0052] and [0076]. | 1-13 |
| Y | US 2006-0210883 A1 (CHEN, Z. et al.) 21 September 2006 (2006-09-21)<br>See claims 1, 3, 11, 15, 16, 18, 20 and 21; paragraphs [0040] and [0051]; and example 1. | 1-13 |
| Y | CN 103000942 A (SHANGHAI NATIONAL ENGINEERING RESEARCH CENTER FOR NANOTECHNOLOGY CO., LTD.) 27 March 2013 (2013-03-27)<br>See claims 1-5; paragraph [0006]; and example 3. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 March 2023** | **02 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/018536**

**C. DOCUMENTS CONSIDERED TO BE RELEVANT**

| Category* | Citation of document, with indication, where appropriate, of the relevant passages | Relevant to claim No. |
|---|---|---|
| A | CN 113381071 A (HUIZHOU YIWEI LITHIUM ENERGY CO., LTD.) 10 September 2021 (2021-09-10) See entire document. | 1-13 |

Form PCT/ISA/210 (second sheet) (July 2022)

**INTERNATIONAL SEARCH REPORT**
**Information on patent family members**

International application No.
**PCT/KR2022/018536**

| Patent document cited in search report | Publication date (day/month/year) | Patent family member(s) | Publication date (day/month/year) |
|---|---|---|---|
| CN 110707360 A | 17 January 2020 | CN 110707360 B | 07 September 2021 |
| KR 10-2019-0060425 A | 03 June 2019 | KR 10-2075091 B1 | 07 February 2020 |
| US 2006-0210883 A1 | 21 September 2006 | US 9184428 B2 | 10 November 2015 |
| | | WO 2006-101779 A2 | 28 September 2006 |
| | | WO 2006-101779 A3 | 22 March 2007 |
| CN 103000942 A | 27 March 2013 | None | |
| CN 113381071 A | 10 September 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 20141471612 A